# EUROPÄISCHE PATENTSCHRIFT

(11) **EP 4 041 502 B1**
(45) Veröffentlichungstag und Bekanntmachung des Hinweises auf die Patenterteilung: **29.11.2023**
(21) Anmeldenummer: 20723288.5
(22) Anmeldetag: 09.04.2020
(51) Int. Cl.: B25J 9/10, B25J 17/02

(54) **ROBOTERARM MIT EINEM KNICKGELENK**
ROBOT ARM HAVING AN ARTICULATED JOINT
BRAS DE ROBOT AYANT UN RACCORD ARTICULÉ

(43) Veröffentlichungstag der Anmeldung: 17.08.2022
(73) Patentinhaber: Agile Robots AG, 81477 München (DE)
(72) Erfinder: DÜRR, Daniel Mark, 81477 München (DE)
(74) Vertreter: Keilitz Haines & Partner Patentanwälte PartGmbB
(86) Internationale Anmeldenummer: PCT/EP2020/060200
(87) Internationale Veröffentlichungsnummer: WO 2021/204393

(56) Entgegenhaltungen:
- CN-A- 110 561 493
- US-A- 5 732 599
- US-A1- 2003 172 536

## Beschreibung

Die Erfindung betrifft einen Roboterarm mit wenigstens zwei Gliedern, die über ein Gelenk, welches ein Abknicken des Arms ermöglicht, miteinander verbunden sind.

### Technischer Hintergrund

Industrieroboter (auch: industrielle Manipulatoren) sind universelle, programmierbare Maschinen zur Handhabung, Montage oder Bearbeitung von Werkstücken oder Objekten. Derartige Roboter gibt es in den unterschiedlichsten Bauformen. Einarmige Roboter sind beispielsweise aus der DE 10 2015 012 959 A1 oder der DE 10 2018 213 499 A1 bekannt. Die dort gezeigten Roboter haben mehrere Glieder, die über Knick- und Rollgelenke miteinander verbunden sind. Die Knickgelenke ermöglichen dabei eine Schwenkbewegung der zugehörigen Glieder um eine Drehachse und die Rollgelenke eine Rotationsbewegung der zugehörigen Glieder um eine Längsachse. US 2003/172536 A1 offenbart einen Roboterarm mit den Merkmalen des Oberbegriffs des Anspruch 1.

Ein Nachteil vieler bekannter Roboterkonstruktionen besteht darin, dass der Abstand des Rollgelenks zum zugehörigen Knickgelenk eines Glieds relativ groß ist. Darunter leidet die Performance bzw. Agilität der Roboter. Eine Verkürzung des Abstandes zwischen Rollgelenk und Knickgelenk würde zudem eine Verkürzung der Gesamtlänge des Roboters und damit eine Erhöhung der Gesamtsteifigkeit ermöglichen.

Andere Roboterkonstruktionen erreichen zwar einen kleineren Abstand zwischen Rollgelenk und Knickgelenk, indem der Bereich des Rollgelenks direkt an den Bereich des Knickgelenks angefügt wird. Dadurch entsteht aber eine Stelle mit geringem Materialquerschnitt, welche die Steifigkeit und Festigkeit des Roboterarms beeinträchtigen.

Es ist daher die Aufgabe der vorliegenden Erfindung einen kompakten, stabilen und agilen Roboter mit einem Roboterarm zu schaffen, der mehrere Glieder aufweist, die über Knick- und Rollgelenke miteinander verbunden sind.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

### Gegenstand der Erfindung

Es wird ein Roboterarm mit wenigstens zwei Gliedern vorgeschlagen, die über ein Knickgelenk miteinander verbunden sind, so dass sie relativ zueinander um eine gemeinsame Drehachse geschwenkt werden können. Die Glieder umfassen an einem Ende jeweils einen Gelenkabschnitt, der einen Teil des Knickgelenks aufnimmt und an den sich ein gekrümmter Übergangsbereich anschließt, der wiederum in einen Schenkelabschnitt mündet. Die Glieder erstrecken sich ferner in einer Längsrichtung, die quer zur Drehachse verläuft und im vollständig gestreckten Zustand des Roboterarms der Haupt-Erstreckungsrichtung des Roboterarms entspricht. Wenigstens eines der zwei Glieder umfasst einen Übergangsbereich mit einer Umfangskante, die sich ausgehend vom Gelenkabschnitt des Glieds in Richtung des Gelenkabschnitts des anderen Glieds erstreckt und, wenn sie aus einer Richtung betrachtet wird, die quer zur Drehachse und quer zur Längsrichtung verläuft, eine zwischen den beiden Gelenkabschnitten vorhandene Trennfuge überquert. Die Umfangskante ist bezüglich der Drehachse in einem radialen Abstand von weniger als 25 mm außerhalb der Oberfläche des darunter liegenden Gelenkabschnitts des anderen Glieds angeordnet. Der Übergangsbereich des einen Glieds schwebt somit in einem sehr geringen Abstand über dem Gelenkabschnitt des anderen Glieds. Darüber hinaus erstreckt sich die Umfangskante wenigstens auf einer Seite des Knickgelenks, wenn sie aus der vorstehend genannten Richtung betrachtet wird, schräg zur Drehachse. Ein derart konstruierter Roboterarm ist besonders kompakt und bietet eine hohe Performance.

In anderen Worten formuliert gilt für den Verlauf der Umfangskante: Wird das Knickgelenk aus einer Richtung betrachtet, die quer zur Drehachse und quer zur Längsrichtung des zugehörigen Glieds verläuft, erstreckt sich die Umfangskante zumindest entlang eines Abschnitts räumlich vor und/oder hinter dem Knickgelenk. Der Punkt, an dem sie die Trennfuge zwischen den beiden Gelenkabschnitten überquert, liegt aus dieser Richtung betrachtet also vor oder hinter dem Knickgelenk. Von diesem Punkt aus verläuft die Umfangskante dann schräg nach oben oder unten (wenn die Drehachse horizontal angeordnet ist) räumlich vor dem Knickgelenk, bis sie den oberen/unteren Rand der Projektionsfläche des anderen Gelenkabschnitts des Knickgelenks überschreitet und radial außerhalb, d.h. oberhalb oder unterhalb, des anderen Gelenkabschnitts verläuft.

Die Umfangskante des einen Glieds hat entlang ihres Verlaufs vorzugsweise einen im Wesentlichen gleichbleibenden radialen Abstand zur Oberfläche des Gelenkabschnitts des anderen Glieds.

Gemäß einer bevorzugten Ausführungsform der Erfindung beträgt der Abstand zwischen der Umfangskante des einen Glieds und der Oberfläche des darunter bzw. radial innen liegenden Gelenkabschnitts des anderen Glieds weniger als 10 mm und insbesondere etwa 1 mm bis 5 mm.

Als "Gelenkabschnitt" soll insbesondere ein Abschnitt eines Glieds verstanden werden, der einen Teil des Knickgelenks bildet und z. B. einen Teil eines elektromotorischen Antriebs darin aufnimmt. Ein Knickgelenk wird vorzugsweise aus zwei benachbarten Gelenkabschnitten zweier Glieder gebildet, die den Gelenkmechanismus darin aufnehmen.

Gemäß einer Ausführungsform der Erfindung verläuft die Umfangskante, wenn sie aus einer Richtung betrachtet wird, die quer zur Drehachse und quer zur Längsrichtung verläuft, wenigstens im Bereich der Trennfuge in einem Winkel zwischen 1° und 70° oder 10° und 50° und vorzugsweise etwa 15° und 30° relativ zur Drehachse.

Die die Umfangskante des Übergangsbereichs definiert gemäß der Erfindung eine Bodenfläche, die in Draufsicht betrachtet V-förmig oder parabelförmig ist und zwei Schenkel aufweist, die bezüglich der Drehachse schräg verlaufen bzw. konvergieren. Die beiden Schenkel können bezüglich des Scheitelpunkts der Kurve symmetrisch sein, sie können aber auch asymmetrisch verlaufen. Die Draufsicht ist dabei eine Ansicht aus einer Richtung, in der die Bodenfläche die größte Ausdehnung zeigt. Hierzu ist anzumerken, dass die Bodenfläche nicht physisch vorhanden sein muss, sondern eine virtuelle Fläche sein kann, die durch die Umfangskante aufgespannt wird.

Gemäß einer bevorzugten Ausführungsform der Erfindung verlaufen die Schenkel der Umfangskante (in Draufsicht betrachtet) wenigstens im Bereich der Trennfuge in einem Winkel zwischen 0° und 30° oder 10° bis 30° und vorzugsweise etwa 15° bis 25° relativ zur Drehachse. Der Winkel zwischen der Umfangskante und der Drehachse beträgt am Ort der Trennfuge vorzugsweise etwa 15°bis 25°.

Die Bodenfläche des Übergangsbereichs eines Glieds und die Oberfläche des darunter bzw. radial innerhalb liegenden Gelenkabschnitts des anderen Glieds sind vorzugsweise parallele Flächen. Bei einer Knickbewegung des Roboterarms bleibt der radiale Abstand zwischen der Bodenfläche des einen Glieds und dem darunter liegenden Gelenkabschnitt des anderen Glieds vorzugsweise konstant.

Das zweite Glied eines Knickgelenks ist vorzugsweise in gleicher Weise ausgebildet wie das erste Glied und hat entsprechend einen Übergangsbereich, der sich ausgehend von seinem Gelenkabschnitt in Richtung des Gelenkabschnitts des ersten Glieds erstreckt, eine zwischen den beiden Gelenkabschnitten vorhandene Trennfuge überquert und dann in einem vorgegebenen radialen Abstand oberhalb des ersten Gelenkabschnitts verläuft. Gemäß einer Ausführungsform der Erfindung hat der Übergangsbereich des zweiten Glieds eine Umfangskante, die bezüglich der Drehachse in einem radialen Abstand von weniger als 25 mm oberhalb der Oberfläche des Gelenkabschnitts des ersten Glieds angeordnet ist. Der Übergangsbereich des zweiten Glieds schwebt somit in einem sehr geringen Abstand über dem Gelenkabschnitt des ersten Glieds. Darüber hinaus erstreckt sich die Umfangskante, wenn sie aus einer Richtung betrachtet wird, die quer zur Drehachse und quer zur Rollachse verläuft, wenigstens auf einer Seite des Knickgelenks schräg zur Drehachse.

Das Knickgelenk ist vorzugsweise derart ausgelegt, dass sich die Trennfuge zwischen den beiden Gliedern im Wesentlichen in der Mitte des Gelenks befindet. Die Trennfuge könnte aber auch gegenüber der Mitte seitlich versetzt angeordnet sein. Die Trennfuge liegt vorzugsweise in einer Ebene, die sich quer zur Drehachse erstreckt.

Gemäß einer Ausführungsform der Erfindung läuft die Umfangskante des Übergangsbereichs des ersten oder zweiten Glieds über die Trennfuge hinweg und setzt sich im Bereich des Gelenkabschnitts desselben Glieds als Kante fort. Der Verlauf der Kante ist dabei im Wesentlichen stetig, d.h. es gibt keine Stufe oder nur eine Stufe von wenigen mm, insbesondere weniger als 5 mm.

Die Glieder des Roboterarms sind vorzugsweise derart gestaltet, dass ein Abschnitt der Umfangskante des ersten Glieds und ein benachbarter Abschnitt der Umfangskante des zweiten Glieds, die zusammen ein Gelenk bilden, im Wesentlichen parallel verlaufen, wenn sich der Roboterarm in einer bestimmten Position befindet. Die parallele Anordnung der benachbarten Abschnitte bzw. Kanten ist vorzugsweise in einer Position des Knickgelenks gegeben, in der sich das Gelenk an einem Endanschlag befindet und die benachbarten Abschnitte bzw. Kanten am nächsten beisammen liegen.

Gemäß einer speziellen Ausführungsform der Erfindung sind die Übergangsbereiche der beiden Glieder so geformt, dass ein im Bereich benachbarter Umfangskanten in Umfangsrichtung (bezüglich der Drehachse) gemessener Abstand zwischen den Übergangsbereichen mit zunehmender Entfernung von der Drehachse größer wird. Dadurch wird verhindert, dass sich ein Nutzer die Finger einklemmt, wenn die Glieder maximal abgewinkelt sind.

Die Übergangsbereiche der beiden Glieder eines Gelenks sind im Bereich ihrer Umfangskanten vorzugsweise so geformt, dass ein V-förmiger Freiraum zwischen den Übergangsbereichen bestehen bleibt, wenn die Glieder maximal abgewinkelt sind. Der V-förmige Freiraum ist vorzugsweise so dimensioniert, dass sich ein Nutzer zwischen zwei Gliedern die Finger nicht einklemmen kann.

### Kurze Beschreibung der Zeichnungen

Die Erfindung wird nachstehend anhand der beigefügten Zeichnungen beispielhaft näher erläutert. Es zeigen:
- Fig. 1: eine Explosionsansicht eines Roboterarms mit mehreren Gliedern, die über Knickgelenke und Rollgelenke miteinander verbunden sind;
- Fig. 2a-d: verschiedene Ansichten des Roboterarms von Fig. 1 in einem vollständig gestreckten Zustand;
- Fig. 3: eine schematische Darstellung eines Knickgelenks, die zur Erläuterung der Grundprinzipien der vorliegenden Erfindung dient;
- Fig. 4: eine explodierte Ansicht eines Knickgelenks des Roboterarms von Fig. 1;
- Fig. 5: eine explodierte Ansicht mehrerer Glieder des Roboterarms von Fig. 1; und
- Fig. 6: eine Draufsicht auf eine Bodenfläche des Übergangsbereichs eines Glieds.

### Ausführungsformen der Erfindung

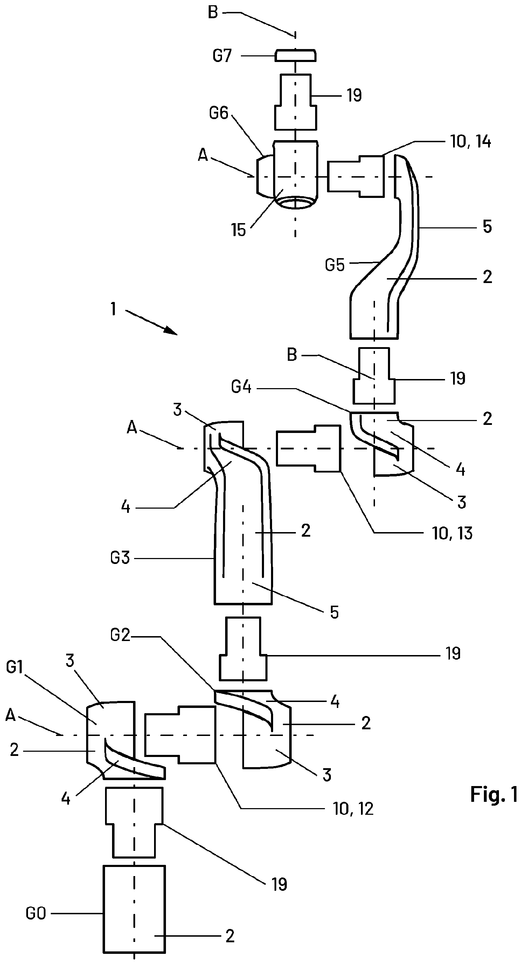

Figur 1 zeigt eine Explosionsansicht eines Roboterarms 1 mit mehreren Gliedern 2, die über mehrere Knick- 10 und Rollgelenke 19 miteinander verbunden sind. Die Knickgelenke 10 ermöglichen jeweils eine Schwenkbewegung der zugehörigen Glieder 2 um eine Drehachse A, und die Rollgelenke 19 jeweils eine Rotationsbewegung der zugehörigen Glieder 2 um eine Rotationsachse B.

Der Roboterarm 1 umfasst in diesem Ausführungsbeispiel genau acht Glieder, nämlich, von unten nach oben, ein Glied G0, welches über ein Rollgelenk 19 mit einem Glied G1 verbunden ist. Letzteres ist über ein Knickgelenk 10 mit einem Glied G2 schwenkbar verbunden. Am oberen Ende des Glieds G2 ist wiederum ein Rollgelenk 19 vorgesehen, welches das Glied G2 mit einem nachfolgenden Glied G3 verbindet. Letzteres ist über ein Knickgelenk 10 mit einem weiteren Glied G4 verbunden. Das Glied G4 ist über ein Rollgelenk 19 mit einem Glied G5 verbunden, und das Glied G5 über ein Knickgelenk 10 mit einem weiteren Glied G6. Das Glied G6 ist schließlich noch über ein Rollgelenk 19 mit einem Glied G7 verbunden.

Bei der hier dargestellten Bauform der Roboterarms 1 sind die Knick- 10 und Rollgelenke 19 übereinander angeordnet. Die Drehachsen Ader Knickgelenke 10 und die Rotationsachsen B der Rollgelenke 19 stehen ferner senkrecht aufeinander.

Die Glieder G1-G6 umfassen jeweils einen Gelenkabschnitt 3, der einen Teil des zugehörigen Knickgelenks 10 darin aufnimmt, einen Übergangsbereich 4 sowie einen Schenkelabschnitt 5, der einen Teil des zugehörigen Rollgelenks 19 aufnimmt. Jedes Knickgelenk 10 umfasst zwei Gelenkabschnitte 3 benachbarter Glieder 2, die in Richtung der Drehachse A nebeneinander angeordnet sind. Zwischen den beiden Gelenkabschnitten 3 eines Knickgelenks 10 befindet sich eine Trennfuge 9, die hier mittig angeordnet ist. Sie könnte aber auch gegenüber der Mitte seitlich versetzt angeordnet sein.

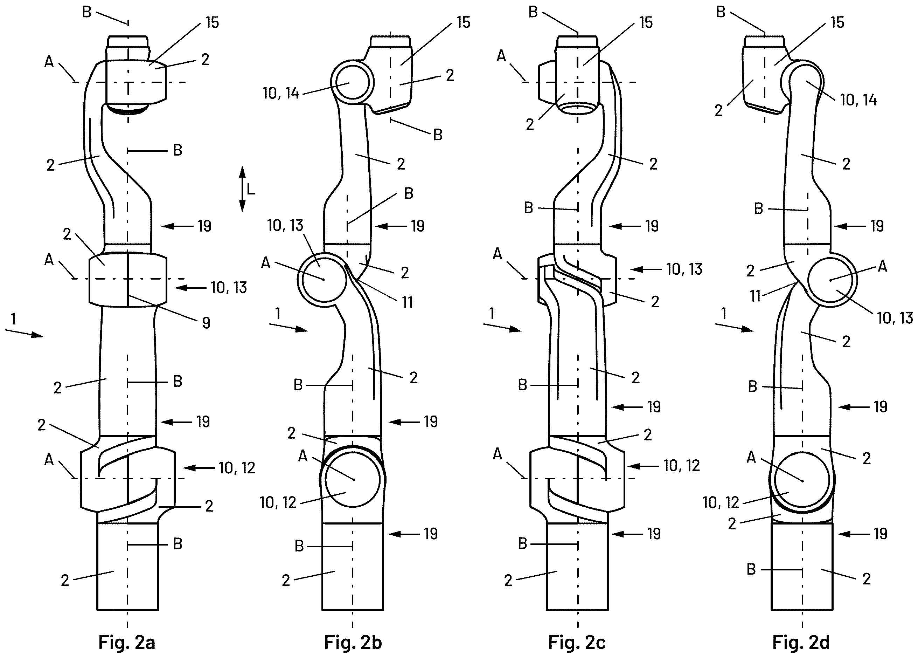

Die Figuren 2a-2d zeigen verschiedene Ansichten des Roboterarms 1 von Figur 1 in einem vollständig gestreckten Zustand. Dabei ist Fig. 2a eine Ansicht von vorne, ist Fig. 2b eine Ansicht von links, Fig. 2c eine Ansicht von hinten und Fig. 2d eine Ansicht von rechts. Im vollständig gestreckten Zustand des Roboterarms 1, wie dargestellt, entspricht die Längsrichtung L der einzelnen Glieder 2 der Haupt-Erstreckungsrichtung des Roboterarms 1.

Der hier dargestellte Roboterarm 1 ist an die Physiognomie eines menschlichen Arms angelehnt. Die Knickgelenke 10 können daher auch als Schultergelenk 12, Ellbogengelenk 13 und Handgelenk 14 bezeichnet werden. Das Glied G6 ist der Roboterkopf 15, an dem abhängig von der jeweiligen Applikation beispielsweise ein Werkzeug oder ein Sensor befestigt ist, mit dem eine gewünschte Tätigkeit ausgeführt werden kann.

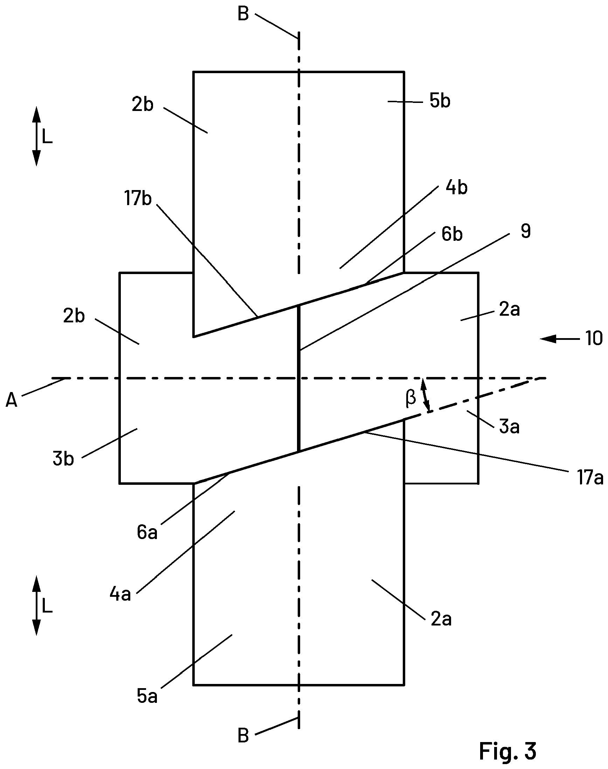

Wie in den Figuren 2a-2d zu erkennen ist, sind insbesondere das Schultergelenk 12 und das Ellbogengelenk 13 sehr kompakt und stabil gebaut. Die konstruktiven Grundsätze dieser Knickgelenke 12, 13 werden im Folgenden anhand von Fig 3 näher erläutert.

Fig. 3 zeigt eine schematische Ansicht eines Knickgelenks 10, das zwei Glieder 2a und 2b miteinander schwenkbar verbindet. Die Glieder 2a, 2b umfassen jeweils einen Gelenkabschnitt 3a, 3b, der einen Teil des Gelenkmechanismus des Knickgelenks 10 aufnimmt, sowie einen Übergangsbereich 4a, 4b, der über den Gelenkabschnitt 3a, 3b des jeweils anderen Glieds 2a, 2b vorragt. An ihren freien Enden (im Bild oben bzw. unten) sind die Glieder 2a, 2b jeweils über ein Rollgelenk 19 mit einem nachfolgenden Glied 2 (nicht gezeigt) verbunden.

Wie in Fig. 3 zu erkennen ist, erstreckt sich der Übergangsbereich 4b des oberen Glieds 2b ausgehend vom Gelenkabschnitt 3b nach rechts in Richtung des Gelenkabschnitts 3a des anderen Glieds 2a, überquert eine Trennfuge 9 in Richtung der Drehachse A und verläuft dann in einem vorgegebenen Abstand knapp oberhalb des Gelenkabschnitts 3a des Glieds 2a. Entsprechendes gilt auch für den Übergangsbereich 4a des anderen Glieds 2a, nur in der umgekehrten Richtung. Die Schenkelabschnitte der beiden Glieder 2a, 2b sind mit dem Bezugszeichen 5 bezeichnet. Die Glieder 2 erstrecken sich im dargestellten Zustand jeweils in einer Längsrichtung L, die quer zur Drehachse A verläuft. Die Längsrichtung L und die Rollachse B zeigen in die gleiche Richtung.

Der Übergangsbereich 4a, b der beiden Glieder 2a, 2b hat an seiner der Drehachse A zugewandten Seite jeweils eine Umfangskante 6, die in einem geringen radialen Abstand von weniger als 10 mm, vorzugsweise etwa 1-4 mm oberhalb der Oberfläche des darunterliegenden Gelenkabschnitts 3a, 3b des jeweils anderen Glieds 2a verläuft. In anderen Worten ragt der Übergangsbereich 4a, 4b der Glieder 2a, 2b über den Gelenkabschnitt 3a, 3b des jeweils anderen Glieds 2a, 2b vor und schwebt in einem geringen Abstand darüber.

Betrachtet man die Umfangskanten 6a, 6b, wie hier, aus einer Richtung, die quer zur Drehachse A und quer zur Längsrichtung L bzw. Rollachse B verläuft, erstreckt sich die jeweilige Umfangskante 6a, 6b schräg zur Drehachse A. Dies hat den Vorteil, dass der Roboterarm 1 besonders kompakt ist und eine hohe Steifigkeit aufweist. Die Umfangskanten 6a, 6b können z. B. einen Winkel β zwischen 1° und 70°, vorzugsweise 15° und 30° relativ zur Drehachse A einnehmen.

In der dargestellten Prinzipskizze sind die Umfangskanten 6a, 6b vereinfacht als gerade Linien eingezeichnet. In Realität können sie auch gekrümmt sein. Der vorstehend definierte Winkel β zwischen einer Umfangskante 6a, 6b und der Drehachse A soll daher wenigstens an einem Ort der Umfangskante 6a, 6b, insbesondere an der Trennfuge 9, vorliegen.

In Fig. 3 ist ferner zu sehen, dass sich die Umfangskanten 6a, 6b der Übergangsbereiche 4a, 4b jeweils im Bereich des Gelenkabschnitts 3a, 3b desselben Glieds 2a, 2b als Gehäusekante 17a, 17b fortsetzen. Der Verlauf der Kanten 6, 17 ist dabei im Wesentlichen stetig, d.h. es gibt keine Stufe im Verlauf, oder nur eine minimale Stufe von wenigen mm, insbesondere etwa 1 mm bis 4 mm.

Die Glieder 2a, 2b sind im Bereich des Knickgelenks 10 außerdem so gestaltet, dass ein Abschnitt der Umfangskante 6a des Glieds 2a und ein Abschnitt der Gehäusekante 17b des anderen Glieds 2b im Wesentlichen parallel verlaufen, wenn sich Knickgelenk 10 in einer Endposition befindet.

Anstelle beider Glieder 2a, 2b könnte auch nur eines der Glieder 2a, 2b einen Übergangsbereich 4a, 4b mit einer schräg verlaufenden Umfangskante 6a, 6b aufweisen. Die Glieder 2a, 2b können auf der anderen Seite der Drehachse A (also im Bild von hinten betrachtet) symmetrisch ausgebildet sein. Alternativ kann auch nur eines der Glieder 2a, 2b symmetrisch ausgebildet sein.

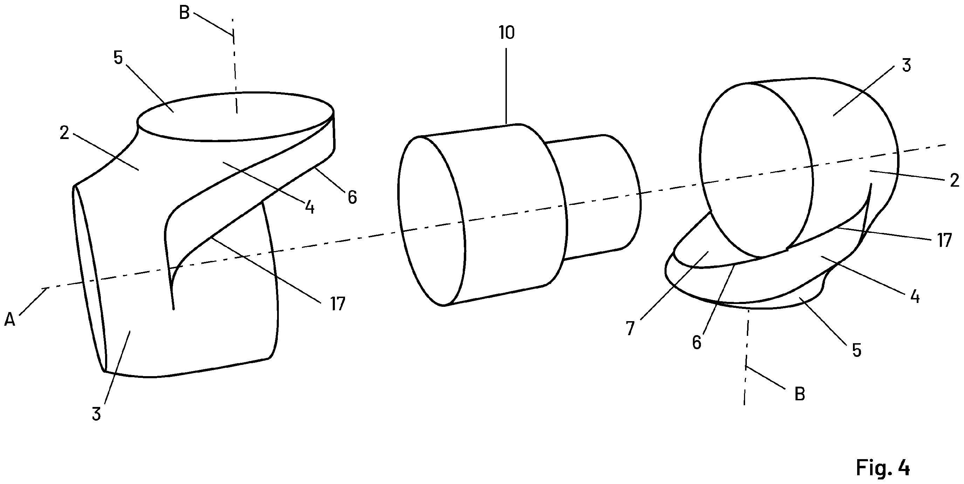

Fig. 4 zeigt zwei nach den vorgenannten Prinzipien ausgeführte Glieder 2, die über ein Knickgelenk 1 schwenkbar miteinander verbunden sind. Dabei ist insbesondere an dem im Bild rechts dargestellten Glied 2 die Umfangskante 6 des Übergangsbereichs 4 gut zu erkennen. Der Übergangsbereich 4 hat ferner eine Bodenfläche 7, die in Richtung der Rollachse betrachtet V-förmig oder parabelförmig ist und zwei Schenkel aufweist, die bezüglich der Drehachse A schräg verlaufen bzw. konvergieren.

Die Bodenfläche 7 des einen Glieds 2 und die darunter liegende Oberfläche des Gelenkabschnitts 3 des anderen Glieds 2 sind vorzugsweise parallele Flächen. Die Oberfläche eines Gelenkabschnitts 3 kann z. B. zylindrisch oder zylindrischtonnenförmig bzw. -bauchig geformt sein, wie dargestellt.

In Fig. 4 ist ferner gut zu sehen, wie sich die Umfangskanten 6 der Übergangsbereiche 4 jeweils im Bereich des Gelenkabschnitts 3 desselben Glieds 2 als Kante 17 fortsetzen. Der Verlauf der Kanten 6, 17 ist dabei im Wesentlichen stetig.

Betrachtet man die Fig. 2c, so erkennt man auch, dass die Übergangsbereiche 4 der beiden Glieder 2b, 2c so geformt sind, dass ein im Bereich benachbarter Umfangskanten 6 in Umfangsrichtung (bezüglich der Drehachse A) gemessener Abstand zwischen den Übergangsbereichen 4 mit zunehmender Entfernung von der Drehachse A größer wird. Die Übergangsbereiche 4 der benachbarten Glieder 2b, 2c sind hier so geformt, dass im Bereich benachbarter Umfangskanten 6 ein V-förmiger Freiraum 11 zwischen den Übergangsbereichen 4 bestehen bleibt, wenn die Glieder 2b, 2c maximal abgewinkelt sind. Dieser Freiraum 11 verhindert, dass sich ein Nutzer die Finger einklemmt, wenn sich das Gelenk 10 in eine Endposition bewegt. Der Freiraum 11 ist vorzugsweise auf beiden Seiten des Gelenks 10 in gleicher oder ähnlicher Weise realisiert.

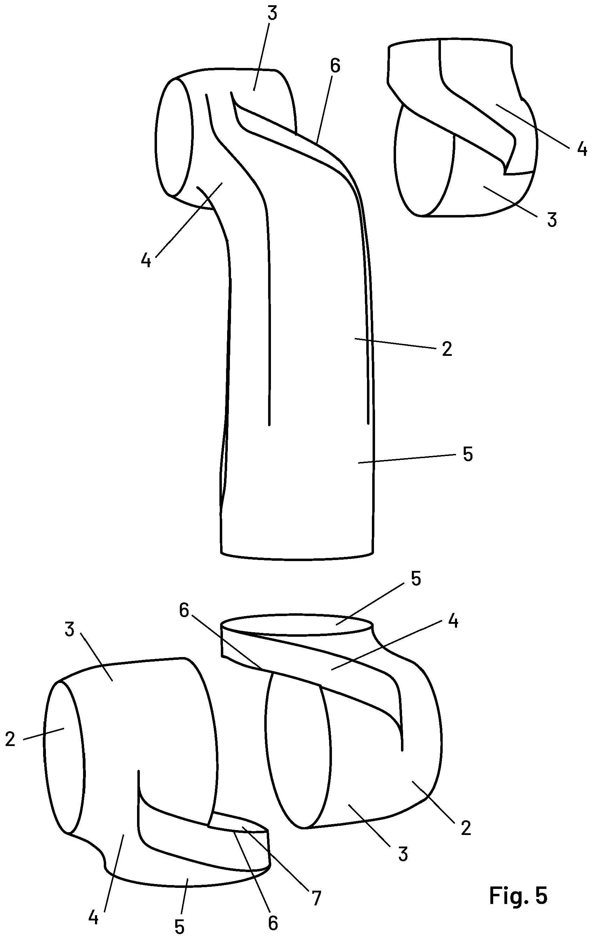

Fig. 5 zeigt eine Explosionsansicht mehrerer Glieder im Bereich des Schultergelenks 12 und des Ellbogengelenks 13 des Roboterarms 1 von Fig. 1.

Darin ist insbesondere der Aufbau der einzelnen Glieder 2 und deren Position innerhalb des Roboterarms gut zu erkennen.

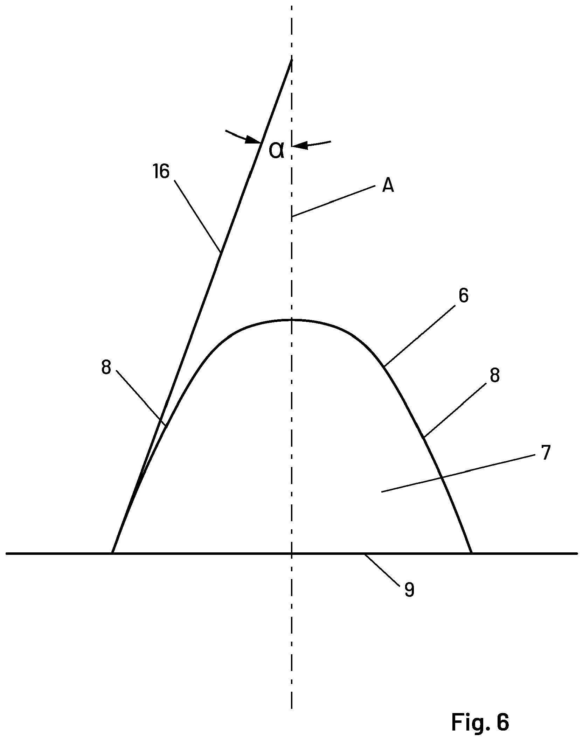

Fig. 6 zeigt exemplarisch die Umfangskante 6 der Bodenfläche 7 eines Glieds 2 des Schultergelenks 12. Die Umfangskanten 6 der anderen Glieder 2 können gleich oder in ähnlicher Weise ausgebildet sein. Wie zu erkennen ist, hat die Umfangskante 6 in Draufsicht betrachtet eine V-förmige oder parabelförmige Kontur mit zwei Schenkeln 8, die bezüglich der Drehachse A schräg verlaufen.

Legt man am Ort der Trennfuge 9 eine Tangente 16 an die Umfangskante 6, so nimmt die Tangente 16 vorzugsweise einen Winkel α zwischen 0° und 30° mit der Drehachse A ein. Die Schenkel 8 der Umfangskante 6 verlaufen also (in Draufsicht betrachtet) im Bereich der Trennfuge in einem Winkel zwischen 0° und 30° relativ zur Drehachse A. Gemäß einer bevorzugten Ausführungsform kann der Winkel α etwa 15°bis 25° betragen.

Die einzelnen Glieder 2 sind vorzugsweise aus Metall oder Kunststoff hergestellt. Die Steuerung des Roboterarms 1 kann im Roboterarm 1 integriert oder an externer Stelle vorgesehen sein.

## Patentansprüche

1. Roboterarm mit wenigstens zwei Gliedern (2), die an einem ihrer Enden über ein Knickgelenk (10) miteinander verbunden sind, so dass sie relativ zueinander um eine Drehachse (A) geschwenkt werden können, wobei sich wenigstens eines der Glieder (2) in einer Längsrichtung (L) erstreckt und einen Gelenkabschnitt (3) sowie einen daran anschließenden Übergangsbereich (4) umfasst, der vom Gelenkabschnitt (3) des Glieds (2) in Richtung des Gelenkabschnitts (3) des anderen Glieds (2) verläuft, wobei
• der Übergangsbereich (4) wenigstens eines der Glieder (2, 2a) eine Umfangskante (6) hat, die, wenn sie aus einer Richtung betrachtet wird, die quer zur Drehachse (A) und quer zur Längsrichtung (L) verläuft, eine zwischen den beiden Gelenkabschnitten (3) vorhandene Trennfuge (9) überquert;
• die Umfangskante (6) bezüglich der Drehachse (A) in einem Abstand von weniger als 25 mm außerhalb der Oberfläche des darunter liegenden Gelenkabschnitts (3) des anderen Glieds (2) verläuft; **dadurch gekennzeichnet,**
• **dass** sich ein Abschnitt der Umfangskante (6), wenn sie aus der Richtung betrachtet wird, die quer zur Drehachse (A) und quer zur Längsrichtung (L) verläuft, an der Position, an der sie die Trennfuge (9) überquert, schräg zur Drehachse (A) erstreckt.

2. Roboterarm nach Anspruch 1, **dadurch gekennzeichnet, dass** die Umfangskante (6) entlang ihres Verlaufs einen im Wesentlichen gleichbleibenden radialen Abstand zur Oberfläche des anderen Glieds (2) hat.

3. Roboterarm nach Anspruch 1, **dadurch gekennzeichnet, dass** die Umfangskante (6) wenigstens im Bereich der Trennfuge (9) in einem Winkel (β) zwischen 1° und 70°relativ zur Drehachse (A) verläuft, wenn sie aus einer Richtung betrachtet wird, die quer zur Drehachse (A) und quer zur Längsrichtung (L) verläuft.

4. Roboterarm nach Anspruch 1, **dadurch gekennzeichnet, dass** die Umfangskante (6) eine Bodenfläche (7) definiert, die in Richtung der Rollachse (B) betrachtet V-förmig oder parabelförmig ist und zwei Schenkel (8) aufweist, die bezüglich der Drehachse (A) schräg verlaufen.

5. Roboterarm nach Anspruch 4, **dadurch gekennzeichnet, dass** die Schenkel (8) der Umfangskante (6) wenigstens im Bereich der Trennfuge (9) in einem Winkel (α) zwischen 10° und 30° relativ zur Drehachse (A) verlaufen.

6. Roboterarm nach Anspruch 1, **dadurch gekennzeichnet, dass** auch das andere Glied (2, 2b) einen Übergangsbereich (4) umfasst, der sich ausgehend von seinem Gelenkabschnitt (3) in Richtung des Gelenkabschnitts (3) des ersten Glieds (2, 2a) erstreckt, dabei die zwischen den beiden Gelenkabschnitten vorhandene Trennfuge (9) überquert und dann in einem vorgegebenen Abstand radial oberhalb des Gelenkabschnitts (3) des ersten Glieds (2a) verläuft, wobei der Übergangsbereich (4) des zweiten Glieds (2, 2b) eine Umfangskante (6) aufweist, die bezüglich der Drehachse (A) in einem radialen Abstand von weniger als 25 mm oberhalb der Oberfläche des darunter liegenden Gelenkabschnitts (3) des ersten Glieds (2a) verläuft und sich, wenn sie aus einer Richtung betrachtet wird, die quer zur Drehachse (A) und quer zur Längsrichtung (L) verläuft, schräg zur Drehachse (A) erstreckt.

7. Roboterarm nach Anspruch 6, **dadurch gekennzeichnet, dass** die zwei Glieder (2) im Bereich eines Knickgelenks (10) benachbarte Kanten (6, 17) aufweisen, die in einer bestimmten Position der Roboterarms im Wesentlichen parallel verlaufen.

8. Roboterarm nach Anspruch 1, **dadurch gekennzeichnet, dass** die Übergangsbereiche (4) der zwei Glieder (2) so geformt sind, dass ein im Bereich der Umfangskanten (6) in Umfangsrichtung bezüglich der Drehachse (A) gemessener Abstand zwischen benachbarten Übergangsbereichen (4) mit zunehmender Entfernung von der Drehachse (A) größer wird.

9. Roboterarm nach Anspruch 8, **dadurch gekennzeichnet, dass** die Übergangsbereiche (4) der beiden Glieder (2) so geformt sind, dass im Bereich benachbarter Umfangskanten (6) ein V-förmiger Freiraum zwischen den Übergangsbereichen bestehen bleibt, wenn die zwei Glieder (2) maximal abgewinkelt sind.

10. Roboterarm nach Anspruch 1, **dadurch gekennzeichnet, dass** die zwischen dem Gelenkabschnitt (3) des ersten und dem Gelenkabschnitt (3) des zweiten Glieds (2) vorhandene Trennfuge (9) im Wesentlichen in der Mitte zwischen den beiden Gelenkabschnitten (3) liegt.

## Claims

1. Robot arm having at least two limbs (2), which are connected to one another at one of their ends via an articulated joint (10) so that they can be pivoted relative to one another about a common rotation axis (A), wherein at least one of the limbs (2) extends in a longitudinal direction (L) and comprises a joint portion (3) and a transition region (4) adjoined thereto, which runs from the joint portion (3) of the limb (2) in the direction of the joint portion (3) of the other limb (2), wherein
• the transition region (4) of at least one of the limbs (2, 2a) has a peripheral edge (6) which, when considered from a direction running transverse to the rotation axis (A) and transverse to the longitudinal direction (L), crosses a parting line (9) present between the two joint portions (3);
• the peripheral edge (6) runs at a distance of less than 25mm outside the surface of the underlying joint portion (3) of the other limb (2) with respect to the rotation axis (A);
**characterised in that**
• a portion of the peripheral edge (6), when considered from the direction running transversely to the rotation axis (A) and transversely to the longitudinal direction (L), extends obliquely to the rotation axis (A) at the position where the peripheral edge crosses the parting line (9).

2. Robot arm according to claim 1, **characterised in that** the peripheral edge (6), along its course, has a substantially constant radial distance from the surface of the other limb (2).

3. Robot arm according to claim 1, **characterised in that** the peripheral edge (6), when considered from a direction transverse to the rotation axis (A) and transverse to the longitudinal direction (L), runs at least in the region of the parting line (9) at an angle (β) between 1° and 70° relative to the rotation axis (A).

4. Robot arm according to claim 1, **characterised in that** the peripheral edge (6) defines a bottom surface (7) that is V-shaped or parabolic when viewed in the direction of the rolling axis (B) and has two legs (8) that run obliquely with respect to the rotation axis (A).

5. Robot arm according to claim 4, **characterised in that** the legs (8) of the peripheral edge (6) run at least in the region of the parting line (9) at an angle (α) between 10° and 30° relative to the rotation axis (A).

6. Robot arm according to claim 1, **characterised in that** the other limb (2, 2b) also comprises a transition region (4) which extends from its joint portion (3) in the direction of the joint portion (3) of the first limb (2, 2a), crosses the parting line (9) present between the two joint portions and then runs at a predetermined distance radially above the joint portion (3) of the first limb (2a), wherein the transition region (4) of the second limb (2, 2b) has a peripheral edge (6) which is arranged at a radial distance of less than 25mm above the surface of the underlying joint portion (3) of the first limb (2a) with respect to the rotation axis (A) and, when considered from a direction transverse to the rotation axis (A) and transverse to the longitudinal direction (L), extends obliquely to the rotation axis (A).

7. Robot arm according to claim 6, **characterised in that** the two limbs (2) in the region of an articulation joint (10) have adjacent edges (6, 17) which run substantially in parallel in a particular position of the robot arm.

8. Robot arm according to claim 1, **characterised in that** the transition regions (4) of the two limbs (2) are shaped in such a way that a distance between adjacent transition regions (4) measured in the region of the peripheral edges (6) in the peripheral direction with respect to the rotation axis (A) increases with increasing distance from the rotation axis (A).

9. Robot arm according to claim 8, **characterised in that** the transition regions (4) of the two limbs (2) are shaped such that, in the region of adjacent peripheral edges (6), a V-shaped free space remains between the transition regions when the two limbs (2) are angled to the maximum.

10. Robot arm according to claim 1, **characterised in that** the parting line (9) present between the joint portion (3) of the first and the joint portion (3) of the second limb (2) lies substantially in the middle between the two joint portions (3).

## Revendications

1. Bras de robot ayant au moins deux membres (2) qui sont reliés l'un à l'autre à leurs extrémités par l'intermédiaire d'un raccord articulé (10) de manière à pouvoir pivoter l'un par rapport à l'autre autour d'un axe de rotation (A), au moins l'un des membres (2) s'étendant dans une direction longitudinale (L) et comprenant une partie de raccord (3) ainsi qu'une région de transition (4) jointive à celle-ci, ladite région transitoire s'étendant à partir de la partie de raccord (3) du membre (2) en direction de la partie de raccord (3) de l'autre membre (2),
• la région de transition (4) de l'au moins un des membres (2, 2a) ayant un bord périphérique (6) qui, quand il est considéré à partir d'une direction s'étendant transversalement à l'axe de rotation (A) et transversalement à la direction longitudinale (L), croise une ligne de séparation (9) entre les deux parties de raccord (3) ;
• le bord périphérique (6) s'étendant sur une distance, par rapport à l'axe de rotation (A), de moins de 25 mm à l'extérieur de la surface de la partie de raccord (3) de l'autre membre (2) disposé au-dessous ;
**caractérisé**
• **en ce qu'**une partie du bord périphérique (6), quand il est considéré à partir d'une direction s'étendant transversalement à l'axe de rotation (A) et transversalement à la direction longitudinale (L), s'étend en oblique par rapport à l'axe de rotation (A) vers une position dans laquelle ledit bord de périphérique croise la ligne de séparation (9).

2. Bras de robot selon la revendication 1, **caractérisé en ce que** le bord périphérique (6) a une distance radiale sensiblement constante par rapport à la surface de l'autre membre (2).

3. Bras de robot selon la revendication 1, **caractérisé en ce que** le bord périphérique (6) s'étend au moins dans la région de la ligne de séparation (9) à un angle (β) compris entre 1 et 70 ° par rapport à l'axe de rotation (A), quand il est considéré à partir d'une direction s'étendant transversalement à l'axe de rotation (A) et transversalement à la direction longitudinale (L).

4. Bras de robot selon la revendication 1, **caractérisé en ce que** le bord périphérique (6) définit une surface de sol (7) qui, quand elle est considérée dans la direction de l'axe de roulement (B), présente une forme en V ou une forme parabolique et comporte deux branches (8) qui s'étendent en oblique par rapport à l'axe de rotation (A).

5. Bras de robot selon la revendication 1, **caractérisé en ce que** les branches (8) du bord périphérique (6) s'étendent au moins dans la région de la ligne de séparation (9) à un angle (α) compris entre 10 et 30 ° par rapport à l'axe de rotation (A).

6. Bras de robot selon la revendication 1, **caractérisé en ce que** l'autre membre (2, 2b) comprend également une région de transition (4) qui s'étend à partir de sa partie de raccord (3) en direction de la partie de raccord (3) du premier membre (2, 2a), traversant ainsi la ligne de séparation (9) entre les deux parties de raccord et s'étend ensuite sur une distance prédéfinie de manière radiale au-dessus de la partie de raccord (3) du premier membre (2a), la région de transition (4) du second membre (2, 2b) comportant un bord périphérique (6) qui s'étend, par rapport à l'axe de rotation (A), sur une distance radiale de moins de 25 mm au-dessus de la surface de la partie de raccord (3) du premier membre (2a) disposée au-dessous et qui, quand il est considéré à partir d'une direction s'étendant transversalement à l'axe de rotation (A) et transversalement à la direction longitudinale (L), s'étend en oblique par rapport à l'axe de rotation (A).

7. Bras de robot selon la revendication 6, **caractérisé en ce que** les deux membres (2) comportent des bords adjacents (6, 17) dans la région d'un raccord articulé (10), lesquels bords adjacents s'étendent de manière sensiblement parallèle dans une position précise du bras de robot.

8. Bras de robot selon la revendication 1, **caractérisé en ce que** les régions de transition (4) des deux membres (2) sont formées de telle manière qu'une distance mesurée dans la région des bords périphériques (6) dans la direction périphérique par rapport à l'axe de rotation (A) entre les régions de transition (4) adjacentes s'agrandit à mesure de l'écartement par rapport à l'axe de rotation (A).

9. Bras de robot selon la revendication 8, **caractérisé en ce que** les régions de transition (4) des deux membres (2) sont formées de telle manière qu'un espace libre en forme de V demeure entre les régions de transition dans la région des bords périphériques (6) adjacents lorsque les deux membres (2) sont déroulés au maximum.

10. Bras de robot selon la revendication 1, **caractérisé en ce que** les lignes de séparation (9) entre la partie de raccord (3) du premier membre et la partie de raccord (3) du second membre (2) se trouvent sensiblement à mi-distance entre les deux parties de raccord (3).
